# EUROPEAN PATENT APPLICATION

(11) **EP 1 526 154 A1**
(43) Date of publication of application: **27.04.2005**
(21) Application number: 03741537.9
(22) Date of filing: 22.07.2003
(51) Int. Cl.: C08L 21/00, C08K 3/04, B60C 1/00, B60C 13/00, B60C 17/00

(54) **RUBBER COMPOSITION, AND PNEUMATIC TIRE USING THE COMPOSITION**

(30) Priority: 31.07.2002 JP 2002223273
(71) Applicant: THE YOKOHAMA RUBBER CO., LTD., Tokyo 105-8685 (JP)
(72) Inventor: KANENARI, Daisuke, THE YOKOHAMA RUBBER CO., LTD., Hiratsuka-shi, Kanagawa 254-8601 (JP)
(74) Representative: HOFFMANN - EITLE
(86) International application number: PCT/JP2003/009276
(87) International publication number: WO 2004/013222

(57) **Abstract**

A rubber composition enhanced in thermal conductivity and promoted in heat dissipation effect composed of a total 100 parts by weight of at least one rubber and 10 to 100 parts by weight of carbon black derived from, as a starting material, acetylene and having a thermal conductivity of at least a 0.3 kcal/m·h·°C and a pneumatic tire using that rubber composition for at least a part of a sidewall and/or at least a part of the bead of the tire which contacts the tire wheel rim flange.

## Description

### TECHNICAL FIELD

The present invention relates to a rubber composition, more particularly relates to a rubber composition having improved thermal conductivity and promoted heat dissipation effect and a pneumatic tire using said rubber composition for at least the sidewall rubber.

### BACKGROUND ART

In the past, a pneumatic tire (so-called "run-flat tire") capable of running a certain distance even in a damaged or deflated state is known (e.g., see Japanese Unexamined Patent Publication (Kokai) No. 2001-80319). A pneumatic tire of a type reinforcing the inside surface from the carcass of the sidewall with a crescent shaped rubber member generates a large amount of heat when running flat, and therefore, there is the problem that the tire carcass or sidewall reinforcement rubber sometimes decreases in strength and breaks. Accordingly, for the sidewall reinforcement rubber, low heat generating rubber is selectively used, but for run-flat durability, not only heat generation of the sidewall reinforcement rubber, but also cooling by the outside air striking the sidewall surface is an important factor. However, at the present time, no technology has been found for raising the thermal conductivity of the sidewall rubber to promote dissipation of heat.

### DISCLOSURE OF THE INVENTION

Accordingly, the objects of the present invention are to provide a rubber composition moving the heat generated from reinforcement rubber of a sidewall of a run-flat tire faster to the surface, whereby the heat dissipation effect is enhanced and also to provide a pneumatic tire, in particular a run-flat tire, using said rubber composition.

In accordance with the present invention, there is provided a rubber composition comprising a total 100 parts by weight of at least one rubber and 10 to 100 parts by weight of carbon black derived from as a starting material, acetylene and having a thermal conductivity of at least 0.3 kcal/m·h·°C.

In accordance with the present invention, there is also provided a pneumatic tire using said rubber for at least a part of a tire, in particular the sidewall and/or at least a part of the bead of a run-flat tire which contacts the tire wheel rim flange.

### BRIEF DESCRIPTION OF THE DRAWINGS

FIG. 1 is a vertical sectional view in the meridional direction of a side reinforcement type pneumatic tire of the present invention (run-flat tire).
FIG. 2 is a vertical sectional view in the meridional direction of an example of the sectional shape of a sidewall in a run-flat tire of the present invention.

### BEST MODE FOR CARRYING OUT THE INVENTION

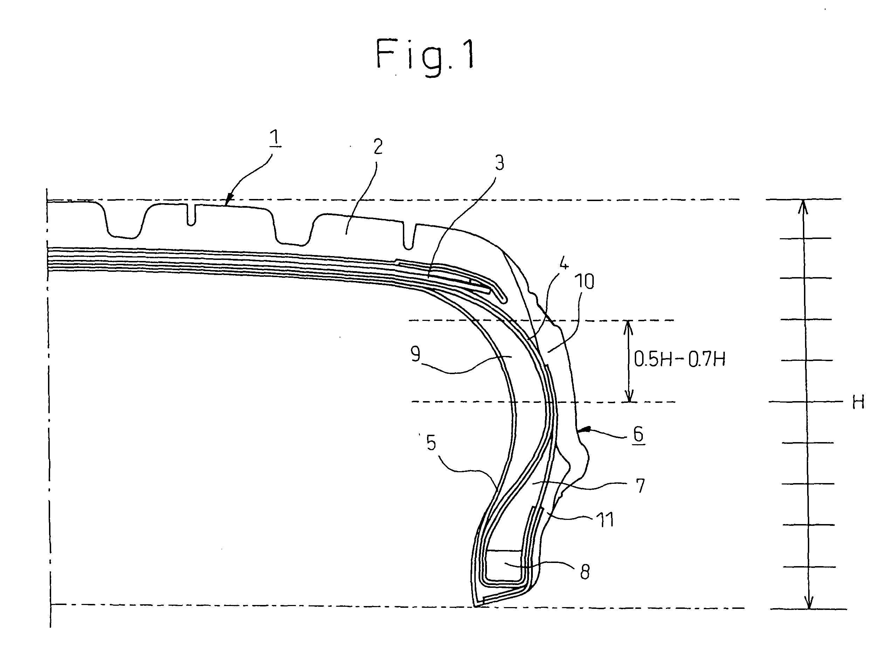

As shown by an example in FIG. 1, the pneumatic tire (run-flat tire) 1 according to the present invention, like an ordinary pneumatic tire, is composed of a cap tread 2, belt 3, carcass 4, inner liner 6, side tread 6, bead filler 7, bead 8, etc. In addition, the tire includes a sectional crescent-shaped side reinforcement layer or includes a sidewall 10 and rim cushion 11 at the side like a conventional run-flat tire.

When such a side reinforcement type run-flat tire 1 becomes flat and is run at zero pressure, a tensile force is applied to the carcass 4 and a compression force is applied to the side reinforcement layer 9 to support the weight of the car. If run in this state, a large strain is applied to the side reinforcement layer which results in the generation of heat and the strength of the carcass cord and side reinforcement layer is gradually decreased. If the strength is decreased, the strain becomes further larger and heat is further generated which results in a vicious cycle. Finally, the tire breaks.

To extend the run-flat distance of the run-flat tire 1, it is important to either keep down the initial deflection of the tire or lower the heat generating property of the tire member rubber and to keep the generation of heat to below a certain level. At this time, there is data that, even with the same tire, the run distance becomes shorter in the summer and becomes longer in the winter. The air temperature at the time of running has an effect. That is, it is possible to extend the run distance by cooling the generated heat with the outside air striking the sidewall 10 during running. Further, by promoting the movement of heat from the tire to the wheel side at the part of the bead 8 which contacts the wheel rim flange, it is also possible to suppress the rise in temperature of the tire.

Therefore, to promote the dissipation of heat from the surface of the sidewall 10, it is effective to increase the thermal conductivity of the rubber members making up the sidewall 10, quickly move the heat generated from the side reinforcement layer rubber 9 to the outer surface, and dissipate it there. Further, it is effective to increase the surface area of the sidewall 10 to raise the heat dissipation efficiency. Further, the method of raising the thermal conductivity of the rubber of the part of the bead 8 which contacts the wheel rim flange to quickly move the generated heat from the bead 8 to the wheel side to dissipate it is also effective.

As the method of increasing the thermal conductivity, it may be considered to simply blend, into the rubber, a material having a large thermal conductivity, for example, a material such as a metal, metal compound. These materials create the problem of deterioration of the rubber physical properties, when large amounts thereof are blended. Therefore, in the present invention, the inventors intensively studied methods for greatly increasing the thermal conductivity, without detracting from the physical properties of the rubber material, and, as a result, found that blending, into the tire rubber, carbon black made from acetylene is most effective.

Carbon black made from acetylene (i.e., acetylene black) is a known material and has been used in the past for dry cell electrodes, tire vulcanization bladders, etc. In the present invention as well, it is possible to use such acetylene black, for example, acetylene black having an average thickness Lc of a graphite crystal structure of stacked or layered carbon planes of 20 to 50 Angstroms and a DBP oil absorption of 150 to 400 cm³/100 g. Specifically, it is possible to use acetylene black commercially available from Denki Kagaku Kogyo, Show a Denko, etc.

According to the present invention, the carbon black made of acetylene (i.e., acetylene black) can increase the thermal conductivity by about 0.05 kcal/m·h·°C by blending about 10 parts by weight of the carbon black into 100 parts by weight of rubber. In the case of a general carbon black, the increase in the thermal conductivity per 10 parts by weight of amount blended is about 0.023 to 0.03 kcal/m·h·°C. Further, in the case of a metal compound, the thermal conductivity increases about 0.018 kcal/m·h·°C in the case of zinc oxide and about 0.026 kcal/m·h·°C in the case of magnesium oxide per 10 parts by weight of amount blended per 100 parts by weight of the rubber. However, with blending of these materials, as mentioned above, the rate of increase in the thermal conductivity becomes inferior to that of carbon black made from acetylene. Further, since the specific gravity is large, this is not preferable in practice for use as a run-flat tire in which an increase in the weight becomes a problem.

If the amount of the acetylene black blended in the rubber composition of the present invention is an amount giving a thermal conductivity of the rubber composition of at least 0.3 kcal/m·h·°C, preferably at least 0.33 kcal/m·h·°C, it is possible to extend the run-flat distance. The amount blended of the acetylene black needed for this purpose is 10 to 100 parts by weight, preferably 20 to 70 parts by weight, based upon 100 parts by weight of the total amount of the blended rubber in the rubber composition of the present invention. If the amount blended is too small, it is not possible to obtain the desired thermal conductivity, while if too large, the rubber becomes too hard, and therefore the flexibility and weather resistance required for rubber for the sidewall 10 are impaired and an increase in the rolling resistance is invited.

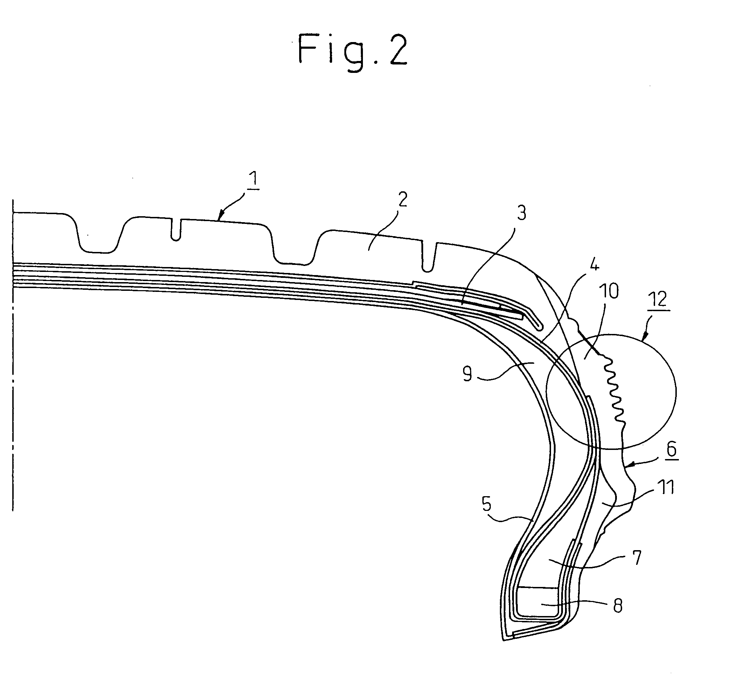

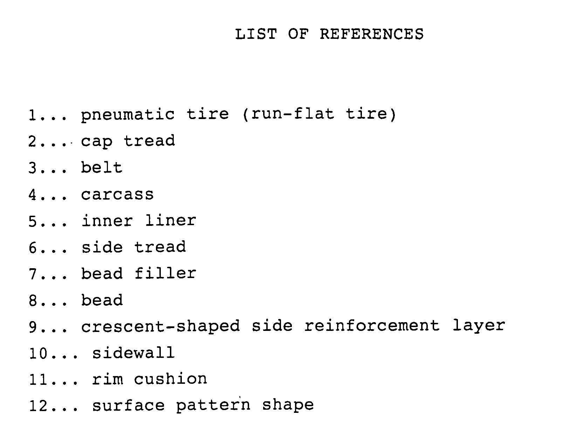

When using a rubber composition according to the present invention for at least a part of the sidewall 10 of the tire, preferably, as shown in FIG. 1, when the height of the tire is H, if making the surface area of the portion of at least the height 0.5H to 0.7H, more preferably 0.4H to 0.8H, a surface area of at least 1.2 times, more preferably at least 1.4 times the projected area in the rotation axis direction of the tire by making a suitable surface pattern shape such as shown by 12 of FIG. 3, it is possible to effectively dissipate the heat generated during running by the outside air and possible to greatly improve the run-flat performance of the tire. The pattern shape of the surface is not particularly limited so long as it is a shape increasing the surface area. For example, it may be a bellows (or cornice) waveform (see FIG. 2) or dimples seen on the surface of a golf ball, diamond shapes, convex shapes, etc.

The rubber composition according to the present invention, as explained above, has a much larger thermal conductivity than a rubber composition including a conventional general carbon black through the blending of acetylene black and exhibits an excellent heat dissipation property, and therefore, can be effectively used for a tire member where the heat generation property becomes a problem.

For the rubber ingredient used in the rubber composition of the present invention, it is possible to use various types of rubber components in relation to the application. In particular, as the rubber component for a pneumatic tire of the present invention, for example, diene-based rubbers such as natural rubber (NR), polyisoprene rubber (IR), various types of styrene-butadiene copolymer rubber (SBR), various types of polybutadiene rubber (BR), acrylonitrile-butadiene copolymer rubber (NBR); butyl rubber (IIR), halogenated butyl rubber (CIIR or BIIR), ethylene-propylene copolymer rubber (EPM or EPDM), etc. may be used alone or in any conbination thereof.

According to the present invention, the object of the present invention can be achieved by using a rubber composition, having a thermal conductivity of at least 0.3 kcal/m·h·°C, preferably at least 0.33 kcal/m·h·°C, more preferably 0.35 to 0.6 kcal/m·h·°C, comprising 10 to 100 parts by weight, preferably 20 to 70 parts by weight, of carbon black made from acetylene (i.e., acetylene black) based upon the total 100 parts by weight of the at least one rubber ingredient for at least a part of the tire. This composition can be used for at least a part of the sidewall 10 and/or at least a part of the bead 8 which contacts the tire wheel rim flange of a pneumatic tire (run-flat tire) having a sectional crescent-shaped side reinforcement layer 9 imparting a run-flat property arranged between the carcass layer 4 and inner liner layer 5 of the sidewall 10. In this case, the remaining part of the sidewall 10 and/or bead 8 can be made with any conventional rubber. This configuration can be obtained in, for example, the following way.

That is, the inner layer 5, side reinforcement layer 9, and carcass 4 are successively wrapped around a tire forming drum, the bead 8 is struck in to turn up the carcass, then the side tread 6 is wrapped. Separately, for example, two belts 3 and a cap tread 2 are formed in a ring and these are joined. Further, the cap tread 2 and the sidewall 10 can be formed integrally by laminating and vulcanizing them. The sidewall 10 and rim cushion 11 are formed integrally by injection molding.

The sectional crescent-shaped side reinforcement layer rubber 9 of the pneumatic tire (run-flat tire) according to the present invention has a 50% modulus of preferably 3.0 to 10 MPa, more preferably 4.0 to 10 MPa, and a tanδ (60°C) of preferably not more than 0.1, more preferably 0.01 to 0.08.

If the sectional crescent-shaped side reinforcement layer rubber 9 is composed of a preferable embodiment, that is, (A) at least 40 parts by weight, more preferably 40 to 70 parts by weight, of polybutadiene rubber, (B) 5 to 40 parts by weight, more preferably 10 to 35 parts by weight, of a composition composed of 20 to 120 parts by weight, more preferably 30 to 100 parts by weight of a metal salt of an ethylenically unsaturated carboxylic acid (for example zinc (meth)acrylate) blended into 100 parts by weight of an ethylenically unsaturated nitrile-conjugated diene-based high saturation copolymer rubber having a content of conjugated diene units of not more than 30% by weight, more preferably 5 to 25% by weight, and (C) carbon black having a BET specific surface area of not more than 70 m²/g, more preferably 30 to 60 m²/g, in an amount giving (B)+(C) of 20 to 70 parts by weight, more preferably 30 to 70 parts by weight, all crosslinked with an organic peroxide, a reduction of weight can be achieved, while maintaining the durability of the run-flat tire. As the organic peroxide, those usable for the peroxide vulcanization of an ordinary rubber may be used. For example, dicumyl peroxide, di-ti-butyl peroxide, t-butylcumyl peroxide, benzoyl peroxide, 2,5-dimethyl-2,5-di(t-butylperoxy)hexine-3, 2,5-dimethyl-2,5-di(benzoylperoxy)hexane, α,α'-bis(t-butylperoxy-m-isopropyl)benzene, etc. may be mentioned. These peroxides may be used alone or in any combinations thereof and are preferably blended in amounts of 0.2 to 10 parts by weight, preferably 0.2 to 6 parts by weight, based upon 100 parts by weight of rubber.

In a preferred embodiment of the present invention, if the ratio X/Y of the average iodine adsorption value X (mg/g) of the carbon black included in the sidewall rubber to the average iodine adsorption value Y (mg/g) of carbon black included in the sectional crescent-shaped side reinforcement layer rubber is at least 1.5, more preferably 1.7 to 4.0, it is possible to keep down the generation of heat from the side reinforcement layer and increase the heat dissipation efficiency from the sidewall surface and possible to greatly improve the durability.

The rubber composition of the present invention may contain, in addition to the above essential ingredients, reinforcing agents such as carbon black, silica, vulcanization agents or cross-linking agents, vulcanization or cross-linking accelerators, various types of oils, antioxidants, fillers, coloring agents, softening agents, plasticizers, and other various types of compounding agents and additives to be blended in for tires or for general rubber compositions. The amounts of incorporation these compounding agents and additives may be made general amounts of incorporation so long as the object of the present invention is not adversely affected.

### Examples

The present invention will now be explained with reference to a Standard Example and Examples of the invention, but the scope of the present invention is of course not limited to these Examples.

### Standard Example and Examples 1 to 9

Test samples composed of the rubber formulations a to e of the sidewall members and rim cushion members shown in the following Table I and the rubber formulations f to j shown in Table II were prepared and the material properties of these rubber compositions were determined.

### Preparation of Test Rubber Compositions for Sidewalls and Rim Cushions

In components except for the sulfur and vulcanization accelerator in Table I were mixed by a 1.8 liter internal mixer for 3 to 5 minutes and dumped after reaching 165±5°C to form a master batch. The sulfur and vulcanization accelerator were mixed therewith by an 8-inch open roll to obtain a rubber composition. This was tested by the following methods. The results are shown in Table I.
1) JIS hardness: The above rubber composition was press vulcanized in a 15 cm x 15 cm x 0.2 cm mold at 160°C for 20 minutes to prepare a test piece (rubber sheet). The Durometer A hardness was measured according to JIS K6250.
2) Thermal conductivity: The above rubber composition was press vulcanized in a 15 cm x 15 cm x 1 cm mold at 160°C for 20 minutes to prepare a test piece (rubber sheet). The thermal conductivity was measured by a Showa Denko fast thermal conductivity meter Shotherm QTM-DII.
3) Average iodine adsorption value Y (mg/g): The carbon blacks added to the rubber compositions were measured according to Paragraph 6 of JIS K6217. The average of the values was calculated in based upon the ratio of incorporation of the carbon black.

**Table I**

| (Sidewall and Rim Cushion Formulations) | | | | | |
|---|---|---|---|---|---|
| | Sidewall | | | Rim cushion | |
| | Formulation a | Formulation b | Formulation c | Formulation d | Formulation e |
| Formulation (parts by weight) | | | | | |
| Natural rubber^{*1} | 40 | 40 | 40 | 50 | 40 |
| Polybutadiene rubber^{*2} | 60 | 60 | 60 | 50 | 60 |
| FEF grade carbon black^{*3} | 50 | 40 | 30 | 80 | 20 |
| Acetylene carbon black^{*4} | - | 10 | 30 | - | 80 |
| Zinc white^{*5} | 3 | 3 | 3 | 3 | 3 |
| Stearic acid^{*6} | 1 | 1 | 1 | 1 | 1 |
| Aromatic oil^{*7} | 10 | 10 | 10 | 10 | 10 |
| Antioxidant 6C^{*8} | 3 | 3 | 3 | 2 | 2 |
| Antioxidant 223^{*9} | 1 | 1 | 1 | - | - |
| Paraffin wax^{*10} | 2 | 2 | 2 | 0.5 | 0.5 |
| Sulfur^{*11} | 1.5 | 1.5 | 1.5 | 3 | 3 |
| Vulcanization accelerator CZ^{*12} | 1 | 1 | 1 | - | - |
| Vulcanization accelerator NS^{*13} | - | - | - | 1 | 1 |
| Evaluated physical properties | | | | | |
| JIS A hardness | 53 | 53 | 54 | 75 | 78 |
| Thermal conductivity (kcal/m·h·°C) | 0.256 | 0.302 | 0.372 | 0.289 | 0.510 |
| Average iodine adsorption X (mg/g) | 42 | 41 | 67 | 40 | 82 |

| | | | | | |
|---|---|---|---|---|---|
| Table I Notes *1: TSR20 | | | | | |
| *2: Nipol BR1220 (made by Nippon Zeon) | | | | | |
| *3: HTC#100 (made by Nippon Steel Chemical Carbon) | | | | | |
| *4: Denka Black (made by Denki Kagaku Kogyo) | | | | | |
| *5: Zinc White #3 (made by Seido Chemical) | | | | | |
| *6: Beads Stearic Acid (made by NOF Corporation) | | | | | |
| *7: Extract No. 4S (made by Showa Shell Petrochemical) | | | | | |
| *8: Nocrac 6C (made by Ouchi Shinko Chemical Industrial) | | | | | |
| *9: Nocrac 224 (made by Ouchi Shinko Chemical Industrial) | | | | | |
| *10: Sannoc (made by Ouchi Shinko Chemical Industrial) | | | | | |
| *11: Crystex HSOT20 (made by Flexis) | | | | | |
| *12: Nocceler CZ (made by Ouchi Shinko Chemical Industrial) | | | | | |
| *13: Nocceler NS (made by Ouchi Shinko Chemical Industrial) | | | | | |

As is clear from the results of Table I, with the rubber compositions of formulations b, c, and e incorporating carbon black made from acetylene according to the present invention, the hardness is kept low and the thermal conductivity becomes larger compared with the formulations a and d containing conventional carbon black.

### Preparation of Test Rubber Composition for Side Reinforcement Layer

In ingredients except for the sulfur and vulcanization accelerator in Table II were mixed by a 1.8 liter internal mixer for 3 to 5 minutes and dumped after reaching 165±5°C to form a master batch. The sulfur and vulcanization accelerator were mixed thereto by an 8-inch open roll to obtain a rubber composition. This was tested by the following method.
1) 50% modulus (MPa): Measured according to JIS K6251
2) tanδ (60°C): Measured using Toyo Seiki viscoelastic spectrometer under conditions of dynamic strain of 10±2% and frequency of 20Hz
3) Average iodine adsorption value Y (mg/g): Same as test method of Table I

**Table II**

| (Side Reinformation Layer) | | | | | |
|---|---|---|---|---|---|
| | Formulation f | Formulation g | Formulation h | Formulation i | Formulation j |
| Ingredients (parts by weight | | | | | |
| Natural rubber^{*1} | 40 | 40 | 20 | 10 | 10 |
| BR^{*2} | 60 | 60 | 70 | 60 | 70 |
| HNBR/ZnMA composite^{*3} | - | - | 10 | 30 | 20 |
| Carbon FEF grade^{*4} | 40 | 45 | 40 | 30 | - |
| Carbon GPF grade^{*5} | - | - | - | - | 40 |
| Zinc white^{*6} | 3 | 3 | 3 | 3 | 3 |
| Stearic acid^{*7} | 1 | 1 | 1 | 1 | 1 |
| Sulfur^{*8} | 4 | 6 | - | - | - |
| Accelerator^{*9} | 2 | 3 | - | - | - |
| Organic peroxide^{*10} | - | - | 4 | 4 | 4 |
| Cross-linking agent^{*11} | - | - | 1 | 1 | 1 |
| Physical properties test | | | | | |
| 50% modulus (MPa) | 2.6 | 3.2 | 4.2 | 7.0 | 5.8 |
| tanδ (60°C) | 0.13 | 0.09 | 0.07 | 0.07 | 0.05 |
| Average iodine adsorption Y (mg/g) | 42 | 42 | 42 | 42 | 36 |

| | | | | | |
|---|---|---|---|---|---|
| Table II Notes *1: RSS#3 | | | | | |
| *2: Nipol BR1220 (made by Nippon Zeon) | | | | | |
| *3: ZSC 2395 (made by Nippon Zeon) | | | | | |
| *4: HTC#100 (made by Nippon Steel Chemical Carbon) | | | | | |
| *5: HTC#G(made by Nippon Steel Chemical Carbon) | | | | | |
| *6: Zinc White #3 (made by Seido Chemical) | | | | | |
| *7: Beads Stearic Acid (made by Kao Corporation) | | | | | |
| *8: Extract No. 4S (made by Showa Shell Petrochemical) | | | | | |
| *9: Crystex HSOT20 (made by Flexis) | | | | | |
| *10: Parkadox 14/40 (made by Kayaku Akzo) | | | | | |
| *11: Acryester TMP (made by Mitsubishi Rayon) | | | | | |

### Standard Example 1 and Examples 1 to 9

Sidewall members, rim cushion members, and side reinforcement layer rubber members composed of the rubber compositions of the above formulations a to e and formulations f to j were obtained, green tires thereof obtained in place of tires of the tire size 235/45ZR17 were prepared, and these were vulcanized and shaped in a mold to obtain the test tires shown FIG. 2 or FIG. 3 which were then used for the following run-flat durability test.

### Durability Test Method

1) Run-flat distance: Each test tire was attached to a rim of a rim size 17 x 8JJ, then attached to the right front of a rear wheel drive test car having an engine of 2.5 liters. The tire was run on preliminarily for two laps around an oval shaped course under an air pressure of 230 kPa at a speed of 90 km/h, then the valve core was pulled out and the tire was run counterclockwise at zero air pressure at 90 km/h. The distance until the test driver felt abnormal vibration due to the tire trouble and stopped driving was measured. The result was shown indexed to the standard example as 100. The larger the numerical value, the better the run-flat durability.

The results are shown in Table III.

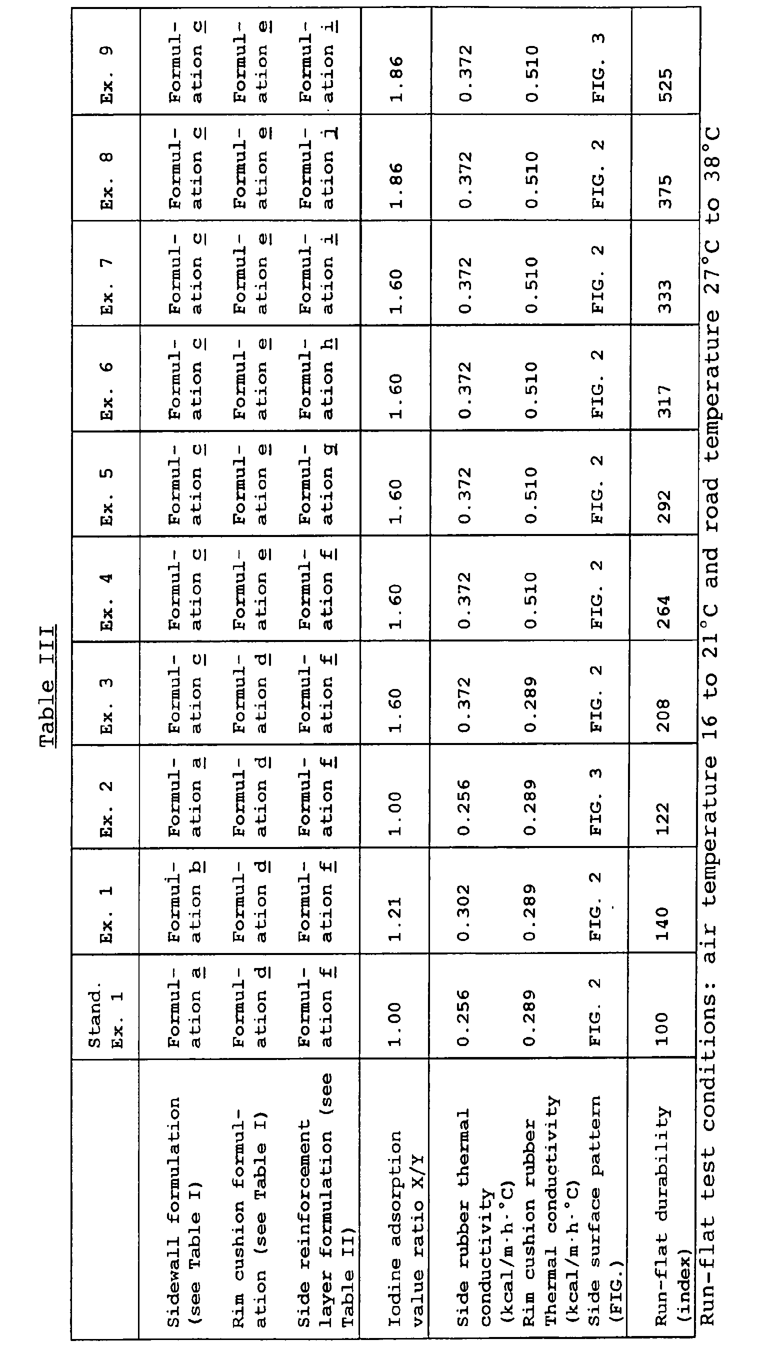

As is clear from the results of Table III, a tire using a rubber composition containing a predetermined carbon black made from acetylene for the tire sidewall rubber and/or rim cushion rubber or side reinforcement layer rubber is improved in run-flat durability, while one further with a relief pattern 12 such as shown in FIG. 3 on the sidewall surface is remarkably improved in run-flat durability.

Standard Example 1 is an example using a conventional sidewall rubber. The run-flat distance of this tire is used as a reference.

Example 1 is an example where the sidewall is replaced with acetylene black-containing rubber and features an extended run-flat distance. Example 2 is an example where the sidewall surface is given a relief pattern for further extension of the run distance. Example 3 is an example of further improvement of the thermal conductivity whereby it was possible to run for more than double the distance of the standard tire. Example 4 is an example of improvement of the thermal conductivity of the rim cushion in addition to the sidewall, whereby the run distance was further extended.

Example 5 is an example of the case of making the 50% modulus of the side reinforcement layer rubber at least 3-fold, Example 6 is an example of a case of using a hydrogenated NBR/ZnMA composite for the side reinforcement layer rubber, Example 7 is an example of a case of increasing the amount of the hydrogenated NBR/ZnMA of the side reinforcement layer rubber, Example 8 is an example of a case of further reducing the iodine adsorption of carbon of the side reinforcement layer rubber and raising the ratio X/Y, and Example 9 is an example of giving a relief pattern to the side surface to the combination of rubber of Example 7. In each, compared with Standard Example 1, the run distance was greatly improved.

### INDUSTRIAL APPLICABILITY

The rubber composition according to the present invention, through the incorporation of acetylene black, exhibits the effects of a high thermal conductivity and, therefore, a superior heat dissipation effect and, when used for the sidewall or at least part of the members of the bead, an extremely superior run-flat performance, in particular tire durability, and therefore is extremely useful as a sidewall member and rim cushion member of a run-flat tire.

## Claims

1. A rubber composition having a thermal conductivity of at least 0.3 kcal/m·h·°C comprising a total 100 parts by weight of at least one rubber and 10 to 100 parts by weight of carbon black derived from, as a starting material, acetylene.

2. A pneumatic tire using the rubber composition according to claim 1 for at least part of the tire.

3. A pneumatic tire having a sectional crescent-shaped side reinforcement layer imparting run-flatness arranged between a carcass layer of a sidewall and an inner liner layer, wherein the rubber composition according to claim 1 is used for at least a part of the sidewall of the tire and/or at least a part of a bead contacting a tire wheel rim flange.

4. A pneumatic tire as claimed in claim 3, wherein a 50% modulus of a rubber of said sectional crescent-shaped side reinforcement layer is 3.0 to 10 MPa and a tanδ (60°C) is not more than 0.1.

5. A pneumatic tire as claimed in claim 3 or 4, wherein said sectional crescent-shaped side reinforcement layer is composed of a rubber composition comprising (A) at least 40 parts by weight of a polybutadiene rubber, (B) 5 to 40 parts by weight of a composition obtained by blending 100 parts by weight of an ethylenic unsaturated nitrile-a conjugated diene-based highly saturated copolymer rubber having a content of conjugated diene units of not more than 30% by weight with 20 to 120 parts by weight of a metal salt of an ethylenic unsaturated carboxylic acid and (C) carbon black having a BET specific surface area of not more than 70 m²/g, provided that the total amount of the components (B) and (C) is 20 to 70 parts by weight, of which composition is cross-linked with an organic peroxide.

6. A pneumatic tire as claimed in claim 3, wherein a ratio X/Y of an average iodine adsorption value X (mg/g) of carbon black included in the sidewall rubber to an average iodine adsorption value Y (mg/g) of carbon black included in the sectional crescent-shaped side reinforcement layer rubber is at least 1.5.

7. A pneumatic tire as claimed in claim 3, wherein, when a height of said pneumatic tire is H, a surface area of the sidewall at least in a region of a height of 0.5 to 0.7H is at least 1.2 times of a projected area in the tire rotational axis direction.
